# EUROPÄISCHE PATENTSCHRIFT

(11) **EP 3 999 717 B1**
(45) Veröffentlichungstag und Bekanntmachung des Hinweises auf die Patenterteilung: **20.12.2023**
(21) Anmeldenummer: 20757520.0
(22) Anmeldetag: 14.07.2020
(51) Int. Cl.: F01D 5/30, F01D 5/32

(54) **ZWISCHENELEMENT FÜR EINE SCHAUFEL-ROTORSCHEIBEN-VERBINDUNG BEI EINEM ROTOR EINER STRÖMUNGSMASCHINE, ROTOR FÜR EINE STRÖMUNGSMASCHINE UND STRÖMUNGSMASCHINE**
INTERMEDIATE ELEMENT FOR A BLADE TO-ROTOR DISK CONNECTION FOR A ROTOR OF A TURBOMACHINE, ROTOR FOR A TURBOMACHINE AND TURBOMACHINE
ÉLÉMENT INTERMÉDIAIRE POUR UNE CONNEXION AUBE-DISQUE DE ROTOR POUR LE ROTOR D'UNE TURBOMACHINE, ROTOR POUR UNE TURBOMACHINE ET TURBOMACHINE

(30) Priorität: 19.07.2019 DE 102019210699
(43) Veröffentlichungstag der Anmeldung: 25.05.2022
(73) Patentinhaber: MTU Aero Engines AG, 80995 München (DE)
(72) Erfinder: PERNLEITNER, Martin, 80995 München (DE); WITTIG, Klaus, 80995 München (DE); DOPFER, Manfred, 80995 München (DE); FRENO, Dieter, 80995 München (DE); HUMMEL, Tino, 80995 München (DE)
(86) Internationale Anmeldenummer: PCT/DE2020/000154
(87) Internationale Veröffentlichungsnummer: WO 2021/013280

(56) Entgegenhaltungen:
- EP-A1- 2 562 356
- EP-A1- 2 719 864
- EP-A1- 3 418 498
- DE-A1-102017 207 445
- FR-A1- 3 075 255
- JP-A- H0 626 302

## Beschreibung

Die Erfindung betrifft ein Zwischenelement für eine Schaufel-Rotorscheiben-Verbindung bei einem Rotor einer Strömungsmaschine, einen Rotor für eine Strömungsmaschine sowie eine Strömungsmaschine.

### Stand der Technik

Bei Strömungsmaschinen wird oftmals zwischen die Schaufel und die Rotorscheibe ein Zwischenelement in Form eines Verschleißschutzblechs angeordnet, um den Verschleiß bei hoher Belastung zu verringern. Hierdurch können jedoch sich die Luftsystemflächen ändern, insbesondere aufgrund zusätzlicher Toleranzen, die das Zwischenelement einbringt. Dies wiederum kann dazu führen, dass mehr Luft am Schaufelfuß vorbei gelangt, so dass die Luft in der Kavität in Strömungsrichtung hinter der Schaufel heißer wird.

Dies kann die Leistung der Strömungsmaschine verringern. Zudem ist es möglich, dass die Strömungsmaschine hierdurch geschädigt wird bzw. die Lebensdauer der Strömungsmaschine verringert wird.

Im Internationalen Recherchenbericht wurden die folgenden Druckschriften genannt:
EP 3 418 498 A1, EP 2 562 356 A1, FR 3 075 255 A1, JP H06 26302 A und
DE 10 2017 207445 A1.

### Offenbarung der Erfindung

Der Erfindung liegt die Aufgabe zu Grunde ein Zwischenelement für eine Schaufel-Rotorscheiben-Verbindung bei einem Rotor einer Strömungsmaschine aufzuzeigen, bei dem der Luftdurchlass am Schaufelfuß bzw. zwischen Schaufelfuß und Rotorscheibe verringert ist.

Diese Aufgabe wird durch ein Zwischenelement gemäß Anspruch 1 bzw. durch einen Rotor für eine Strömungsmaschine gemäß Anspruch 14 bzw. durch eine Strömungsmaschine nach Anspruch 15 gelöst.

Insbesondere wird die Aufgabe durch ein Zwischenelement für eine Schaufel-Rotorscheiben-Verbindung bei einem Rotor einer Strömungsmaschine, insbesondere bei einem Rotor eines Triebwerks, gelöst, wobei das Zwischenelement derart an die Form eines Schaufelfußes der Schaufel und an eine Schaufelfußaufnahme einer Rotorscheibe zum Aufnehmen des Schaufelfußes angepasst ist, dass das Zwischenelement im zwischen dem Schaufelfuß und der Rotorscheibe angeordneten Zustand einen unmittelbaren Kontakt zwischen Schaufelfuß und Rotorscheibe verhindert, wobei das Zwischenelement auf seiner im zwischen dem Schaufelfuß und der Rotorscheibe angeordneten Zustand der Rotorscheibe zugewandten Außenfläche mindestens einen Vorsprung zum Verringern eines Luftstroms parallel zu der Drehachse des Rotors zwischen der Rotorscheibe und dem Zwischenelement aufweist, und wobei das Zwischenelement auf seiner im zwischen dem Schaufelfuß und der Rotorscheibe angeordneten Zustand dem Schaufelfuß zugewandten Innenfläche eine dem mindestens einen Vorsprung auf der Außenfläche des Zwischenelements korrespondierende Vertiefung aufweist. Erfindungsgemäß ist der mindestens eine Vorsprung im angeordneten Zustand im Bereich einer nichttragenden Flanke des Schaufelfußes angeordnet und erstreckt sich vom Schaufelfuß weg.

Ein Vorteil hiervon ist, dass nur wenig Luft bzw. ein geringer Luftstrom durch den Zwischenbereich zwischen Schaufelfuß und Rotorscheibe strömen kann. Somit ist die Leistung der Strömungsmaschine nur unwesentlich verringert. Gleichzeitig wird ein unmittelbarer bzw. direkter Kontakt zwischen Schaufelfuß und Rotorscheibe verhindert, so dass der Verschleiß des Schaufelfußes bzw. der Rotorscheibe verringert ist. Zudem wird das Einbringen von Wärme in die in Strömungsrichtung der Luft hinter der Schaufel liegende Kavität vermindert. Somit wird eine Schädigung der Strömungsmaschine verhindert. Dies erhöht die Lebensdauer der Strömungsmaschine. Zudem kann die Schaufel bzw. der Schaufelfuß mit Spiel in der Schaufelaufnahme bzw. der Rotorscheibe angeordnet sein, so dass die Schaufel bei vorübergehend auftretenden hohen aerodynamischen Lasten und/oder beim Auftreten von Fremdkörpern auf die Schaufel nachgegeben kann und sich danach wieder von alleine radial ausrichten kann.

Insbesondere wird die Aufgabe auch durch einen Rotor für eine Strömungsmaschine, insbesondere für ein Triebwerk, gelöst, wobei der Rotor eine Rotorscheibe und eine Vielzahl von Schaufeln, die an der Rotorscheibe befestigt sind, umfasst, wobei ein Zwischenelement nach einem der vorhergehenden Ansprüche zwischen mindestens einem Schaufelfuß einer Schaufel und der Rotorscheibe derart angeordnet ist, dass der Schaufelfuß die Rotorscheibe nicht unmittelbar berührt. Der Rotor mit dem Zwischenelement weist zu den oben genannten Vorteilen des Zwischenelements korrespondierende Vorteile auf.

Mit anderen Worten kann ein Zwischenelement an eine Form eines Schaufelfußes einer Schaufel und an eine Schaufelfußaufnahme einer Rotorscheibe angepasst sein und zwischen dem Schaufelfuß und der Rotorscheibe derart angeordnet sein, dass der Schaufelfuß die Rotorscheibe nicht unmittelbar berührt, wobei das Zwischenelement Vertiefungen und einen oder mehrere zu den Vertiefungen komplementäre Vorsprünge aufweisen kann, wobei der Vorsprung bzw. die Vorsprünge einen Luftstrom in einer Richtung parallel zu der Drehachse des Rotors verringert bzw. verringern.

Gemäß einer Ausführungsform ist das Zwischenelement als Blech, insbesondere Verschleißschutzblech, ausgebildet und hat einer Axialschnittkontur, also eine Kontur innerhalb einer Schnittebene senkrecht zur Axialrichtung, welche einer Axialschnittkontur des Schaufelfußes entspricht. Der Schaufelfußes kann dabei z.B. ein Tannenbaum- , Schwalbenschwanz-, Hammerkopfprofil oder ein anderes Profil haben.

Der mindestens eine Vorsprung bzw. die mehreren Vorsprünge können durch Blecheinbuchtungen, wie Sicken, gebildet sein. Das Blech beinhaltet dabei vorzugsweise an den jeweiligen Stellen kein Durchgangsloch und/oder kann an den jeweiligen Stellen des/der Vorsprünge eine unveränderte oder im wesentlichen unveränderte Dicke gegenüber Bereichen ohne die Vorsprünge aufweisen.

Gemäß einer Ausführungsform umgibt das Zwischenelement im angeordneten Zustand den Schaufelfuß, insbesondere vollständig, an seiner der Schaufelfußaufnahme zugewandten Fläche. D.h. das Zwischenelement kann in einigen Ausführungsformen diese nicht in Axialrichtung weisende Außenfläche des Schaufelfußes innerhalb der Schaufelfußaufnahme vollständig bedecken bzw. unmittelbar an diese angrenzen.

Gemäß einer Ausführungsform weist das Zwischenelement auf seiner im zwischen dem Schaufelfuß und der Rotorscheibe angeordneten Zustand der Rotorscheibe zugewandten Außenfläche mehrere Vorsprünge zum Verringern eines Luftstroms parallel zu der Drehachse des Rotors zwischen der Rotorscheibe und dem Zwischenelement und auf seiner dem Schaufelfuß zugewandten Innenfläche mehrere zu den Vorsprüngen jeweils korrespondierende Vertiefungen auf. Vorteilhaft hieran ist, dass der Zwischenraum bzw. Abstand zwischen dem Zwischenelement und der Rotorscheibe an mehreren Stellen verringert bzw. verkleinert werden kann. Somit kann der ungewünschte Luftdurchfluss bzw. Luftstrom zwischen dem Zwischenelement und der Rotorscheibe noch stärker verringert werden. Dies verhindert eine verringerte Leistung der Strömungsmaschine.

Gemäß einer Ausführungsform sind die mehreren Vorsprünge im zwischen dem Schaufelfuß und der Rotorscheibe angeordneten Zustand in einer Schnittebene senkrecht zur Drehachse der Rotorscheibe zumindest teilweise nebeneinander angeordnet. Vorteilhaft hieran ist, dass ein besonders großer Zwischenraum zwischen dem Schaufelfuß und der Rotorscheibe durch mehrere einzelne Vorsprünge verkleinert ist. Dies verringert den Luftstrom zwischen dem Zwischenelement und der Rotorscheibe besonders effektiv.

Gemäß einer Ausführungsform sind die mehreren Vorsprünge im zwischen dem Schaufelfuß und der Rotorscheibe angeordneten Zustand auf unterschiedlichen Höhen entlang der Drehachse des Rotors angeordnet. Vorteilhaft hieran ist, dass der Luftstrom besonders effektiv gestört bzw. vermindert werden kann. Somit kann die Luftstrommasse technisch einfach verringert werden.

Gemäß einer Ausführungsform sind die mehreren Vorsprünge im angeordneten Zustand im Bereich einer nichttragenden Flanke des Schaufelfußes angeordnet und erstrecken sich vom Schaufelfuß weg. Alternativ können ein oder mehrere dieser Vorsprünge im angeordneten Zustand im Bereich einer nichttragenden Flanke des Schaufelfußes angeordnet sein und ein oder mehrere dieser Vorsprünge im angeordneten Zustand im Bereich eines Grunds der Schaufelfußaufnahme angeordnet sein und sich vom Schaufelfuß weg erstrecken. Gerade in diesen nichttragenden Bereichen kann sich im Betreib, während dem die nichttragenden Flanken des Schaufelfuße aufgrund der Fliehkraft gegen die jeweiligen Gegenflanken der Schaufelfußaufnahme gezogen werden, ein Spalt ergeben, ein Luftstrom durch welchen durch den verringert den mindestens einen Vorsprung verringert werden kann. Der/die Vorsprünge können sich also in diese Spalt hinein erstrecken, insbesondere quer zur Axialschnittkontur des Schaufelfußes.

Gemäß einer Ausführungsform weist der mindestens eine Vorsprung im Wesentlichen die Form einer Kalotte auf. Ein Vorteil hiervon ist, dass der Vorsprung technisch besonders einfach herstellbar ist. Durch Erzeugen einer kugelförmigen Vertiefung in dem Zwischenelement kann der Vorsprung technisch einfach erzeugt werden.

Gemäß einer Ausführungsform weist der mindestens eine Vorsprung im zwischen dem Schaufelfuß und der Rotorscheibe angeordneten Zustand in einer Axialschnittebene, d.h. einer Schnittebene senkrecht zur Drehachse der Rotorscheibe eine im Wesentlichen rechteckige Form auf. Auf diese Weise ist ein besonders großer Bereich zwischen dem Zwischenelement und der Rotorscheibe durch den Vorsprung geschlossen. Somit kann der Luftstrom, der durch den Zwischenraum zwischen Zwischenelement und Rotorscheibe strömt, noch stärker gedrosselt bzw. verringert werden.

Gemäß einer Ausführungsform ist im zwischen dem Schaufelfuß und der Rotorscheibe angeordneten Zustand der mindestens eine Vorsprung an einem der Drehachse des Rotors abgewandten Ende des Zwischenelements angeordnet. Ein Vorteil hiervon ist, dass der Luftstrom, der durch den Zwischenraum zwischen Zwischenelement und Rotorscheibe strömt, an Stellen, an denen der Luftstrom ohne Vorsprung üblicherweise besonders hoch ist, verringert werden kann bzw. verringert wird. Somit kann der Vorsprung an Stellen, an denen der Abstand zwischen dem Zwischenelement und der Rotorscheibe bei der Rotation des Rotors besonders hoch ist, angeordnet sein und auf diese Weise den Luftstrom besonders effektiv verringern.

Gemäß einer Ausführungsform ist im zwischen dem Schaufelfuß und der Rotorscheibe angeordneten Zustand zwischen einem der Drehachse des Rotors zugewandten Ende des Zwischenelements und der Rotorscheibe ein axiales Sicherungselement, insbesondere ein axiales Sicherungsblech, zur axialen Sicherung der Schaufel und/oder zum radialen Vorspannen des Schaufelfußes angeordnet. Vorteilhaft hieran ist, dass der Schaufelfuß radial vorgespannt ist. Somit können die Positionen der Vorsprünge besonders präzise positioniert werden. Auf diese Weise kann der Luftstrom durch den Zwischenraum zwischen dem Zwischenelement und der Rotorscheibe besonders effektiv verringert werden. Mithilfe des axialen Sicherungselements kann die Schaufel beispielsweise axial gesichert werden oder sein, indem axiale über den Schaufelfuß hinausragende Enden des axialen Sicherungselements in radiale Richtung umgebogen werden bzw. sind, so dass diese sowohl den Schaufelfuß als auch die Rotorscheibe bereichsweise überdecken und so den Schaufelfuß axial in der Rotorscheibe sichern.

Gemäß einer Ausführungsform ist der mindestens eine Vorsprung in einem planaren Teilbereich des Zwischenelements ausgebildet. Ein Vorteil hiervon ist, dass der Vorsprung technisch leicht ausgebildet bzw. ausgeformt werden kann. Zudem kann der Luftstrom zwischen dem Zwischenelement und der Rotorscheibe gerade in dem Bereich, in dem der Abstand zwischen dem Zwischenelement und der Rotorscheibe üblicherweise am größten ist, stark verringert werden.

Gemäß einer Ausführungsform erstreckt sich der mindestens eine Vorsprung im Wesentlichen über die gesamte Breite des planaren Teilbereichs des Zwischenelements verläuft, wobei sich die Breite des planaren Teilbereichs in einer Schnittebene, die senkrecht zur Drehachse der Rotorscheibe verläuft. Hierdurch ist der Luftstrom zwischen dem Zwischenelement und der Rotorscheibe noch stärker verringert.

Bevorzugte Ausführungsformen ergeben sich aus den Unteransprüchen. Nachfolgend wird die Erfindung anhand von Zeichnungen von Ausführungsbeispielen näher erläutert. Hierbei zeigen:
- Fig. 1: eine Seitenansicht einer Schaufel, die an eine Rotorscheibe angeordnet ist, wobei zwischen der Schaufel und der Rotorscheibe eine Ausführungsform des erfindungsgemäßen Zwischenelements angeordnet ist;
- Fig. 2: eine Querschnittsansicht des Zwischenelements, der Rotorscheibe und der Schaufel aus Fig. 1 entlang der Linie II-II;
- Fig. 3: eine perspektivische Ansicht auf eine weitere Ausführungsform des erfindungsgemäßen Zwischenelements;
- Fig. 4: eine perspektivische Ansicht auf eine weitere Ausführungsform des erfindungsgemäßen Zwischenelements; und
- Fig. 5: eine perspektivische Ansicht auf eine weitere Ausführungsform des erfindungsgemäßen Zwischenelements.

Bei der nachfolgenden Beschreibung werden für gleiche und gleich wirkende Teile dieselben Bezugsziffern verwendet.

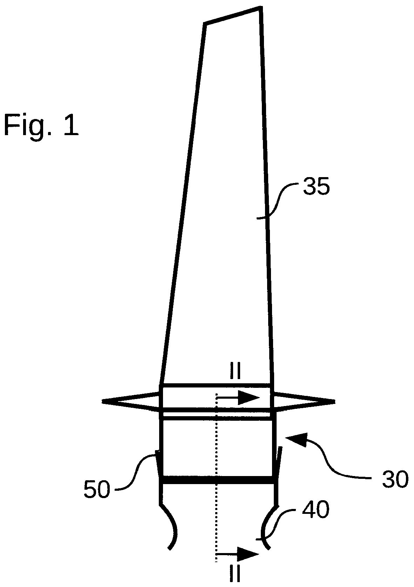

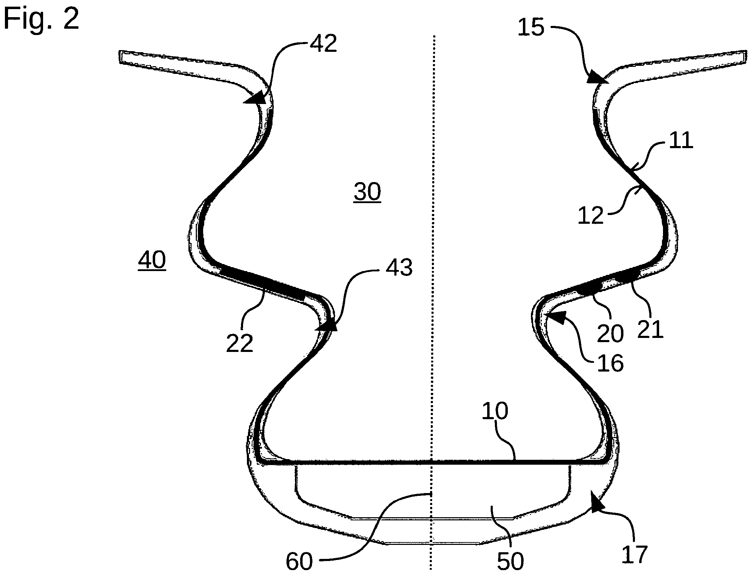

Fig. 1 zeigt eine Seitenansicht einer Schaufel 35, die an einer Rotorscheibe 40 befestigt ist, wobei zwischen der Schaufel 35 und der Rotorscheibe 40 eine Ausführungsform des erfindungsgemäßen Zwischenelements 10 angeordnet ist. Fig. 2 zeigt eine Querschnittsansicht des Zwischenelements 10, der Rotorscheibe 40 und der Schaufel 35 aus Fig. 1 entlang der Linie II-II.

Eine Schaufel 35 einer Strömungsmaschine ist mit ihrem Schaufelfuß 30 (d.h. dem unteren Ende der Schaufel 35) mit einer Rotorscheibe 40 formschlüssig verbunden bzw. an der Rotorscheibe 40 formschlüssig befestigt. Die Rotorscheibe 40 weist zum Aufnehmen des Schaufelfußes 30 eine Schaufelfußaufnahme auf, die eine zu dem Schaufelfuß 30 korrespondierende Aussparung ist. Die Rotorscheibe 40 weist daher mehrere Höcker 42, 43 und Aussparungen auf. Der Schaufelfuß 30 weist hierzu korrespondierend mehrere Aussparungen und Höcker auf. Der Schaufelfuß 30 umfasst den unteren Teil der Schaufel 35, der innerhalb der Schaufelfußaufnahme bzw. in der Aussparung der Rotorscheibe 40 angeordnet bzw. aufgenommen ist.

Die Strömungsmaschine kann eine Gasturbine, z.B. eine Triebwerk für ein Flugzeug, sein. Der Rotor kann insbesondere der Rotor eines Hochdruckverdichters eines Triebwerks sein. Denkbar ist auch, dass der Rotor Teil eines Niederdruckverdichters eines Triebwerks ist.

Zwischen dem Schaufelfuß 30 und der Rotorscheibe 40 ist ein Zwischenelement 10 angeordnet. Die Form des Zwischenelements 10 ist an die Form der Schaufelfußaufnahme der Rotorscheibe 40 bzw. an die Form des Schaufelfußes 30 angepasst. Dies bedeutet, dass die Form des Zwischenelements 10 der Verlaufsform des Zwischenraums zwischen Schaufelfuß 30 und Rotorscheibe 40 im Wesentlichen folgt.

Das Zwischenelement 10 kann als Blech ausgebildet sein. Das Zwischenelement 10 kann ein Verschleißschutzblech sein. Das Zwischenelement 10 verringert den Verschleiß von dem Schaufelfuß 30 bzw. von der Rotorscheibe 40. Zudem verringert das Zwischenelement 10 das Auftreten von Vibrationen. Das Zwischenelement 10 verhindert einen direkten Kontakt bzw. einen unmittelbaren Kontakt zwischen dem Schaufelfuß 30 und der Rotorscheibe 40. Anders gesagt sorgt das Zwischenelement 10 dafür, dass der Schaufelfuß 30 die Rotorscheibe 40 nicht unmittelbar bzw. direkt berührt. Dies trifft insbesondere auf die Situation während des Drehens der Rotorscheibe 40 zu, wenn der Schaufelfuß 30 in radialer Richtung von der Drehachse des Rotors weggedrückt wird. Die Drehachse des Rotors (nicht gezeigt) befindet sich in Fig. 2 unterhalb des gezeigten Teil des Rotors und verläuft senkrecht zur der Zeichenebene der Fig. 2.

Der Abstand zwischen dem Schaufelfuß 30 und der Rotorscheibe 40 ist in unterschiedlichen Bereichen unterschiedlich groß, wie dies in Fig. 2 besonders gut zu sehen ist. Insbesondere in den planaren bzw. ebenen Bereichen des Schaufelfußes 30 bzw. der Rotorscheibe 40 ist ein besonders großes Volumen zwischen Schaufelfuß 30 und Rotorscheibe 40 vorhanden. Hierdurch kann im Stand der Technik viel Luft durch diesen Zwischenbereich parallel zu der Drehachse des Rotors strömen. Dies kann die Luft in der Kavität hinter der Schaufel 35 heißer werden lassen als vorgesehen bzw. gewünscht. Um dies zu verringern, weist das Zwischenelement 10 auf seiner Außenseite bzw. Außenfläche 11 bzw. auf seiner der Rotorscheibe 40 zugewandten Seite einen oder mehrere Vorsprünge 20-22 auf. Das Zwischenelement 10 weist somit auch eine Abdichtungsfunktion auf.

Die Vorsprünge 20-22 auf der Außenseite bzw. Außenfläche 11 des Zwischenelements 10 (die Außenseite bzw. Außenfläche 11 ist der Rotorscheibe 40 zugewandt) korrespondieren mit Vertiefungen auf der Innenseite bzw. Innenfläche 12 des Zwischenelements 10. Die Innenseite bzw. Innenfläche 12 des Zwischenelements 10 ist dem Schaufelfuß 30 zugewandt.

Üblicherweise werden die Vorsprünge 20-22 auf der Außenseite bzw. Außenfläche 11 des Zwischenelements 10 und die Vertiefungen auf der Innenseite bzw. Innenfläche 12 des Zwischenelements 10 gebildet, indem ein Teil des Zwischenelements 10 eingedrückt wird. Die Vorsprünge 20-22 werden sozusagen durch Herausdrücken eines Teils des Zwischenelements 10 erzeugt. Somit weist jeder Vorsprung 20-22 auf der Außenseite bzw. Außenfläche 11 des Zwischenelements 10 eine hierzu komplementäre bzw. korrespondierende Vertiefung auf der Innenseite bzw. Innenfläche 12 des Zwischenelements 10 auf.

In Fig. 2 befindet sich im linken Teil des Zwischenelements 10 ein im Querschnitt rechteckiger Vorsprung 20-22 des Zwischenelements auf der Außenseite bzw. Außenfläche 11 des Zwischenelements 10. Hierdurch wird der Abstand bzw. das Volumen bzw. der Raum zwischen der Außenseite bzw. Außenfläche 11 des Zwischenelements 10 und der Rotorscheibe 40 verringert. Somit kann weniger Luft durch diesen Zwischenbereich senkrecht zur Zeichenebene der Fig. 2 strömen, da der Vorsprung 20-22 als eine Art Drossel bzw. Störelement wirkt. Folglich ist der Luftstrom parallel zu der Drehachse, die ebenfalls senkrecht zur Zeichenebene der Fig. 2 verläuft, verringert. Dies trifft insbesondere auf den Zustand während des Rotierens des Rotors bzw. während des Betriebs der Strömungsmaschine zu.

In Fig. 2 befinden sich im rechten Teil des Zwischenelements 10 zwei Vorsprünge 20-22 nebeneinander. Die Vorsprünge 20-22 befinden sich somit auf der gleichen Höhe entlang der Drehachse des Rotors. Die Vorsprünge 20-22 weisen jeweils eine kalottenförmige Form auf. Die Vertiefungen weisen typischerweise eine hierzu korrespondierende Form auf. Durch die Vorsprünge 20-22 wird das Volumen bzw. der Raum zwischen dem Zwischenelement 10 und der Rotorscheibe 40 verringert. Dies verringert den Luftstrom bzw. Luftmassenstrom durch den Zwischenbereich zwischen dem Zwischenelement 10 und der Rotorscheibe 40.

Die Vorsprünge 20-22 und somit auch die Vertiefungen befinden jeweils in planaren bzw. ebenen Bereichen des Zwischenelements 10. Dies bedeutet, dass in den Bereichen um die jeweilige Vertiefung bzw. den jeweiligen Vorsprung 20-22 das Zwischenelement 10 auf der Außenseite bzw. Außenfläche 11 und/oder auf der Innenseite bzw. Innenfläche 12 planar bzw. eben verläuft, insbesondere dass die Bereiche (unmittelbar) um die jeweilige Vertiefung bzw. den jeweiligen Vorsprung 20-22 keine Krümmung aufweisen. Denkbar ist jedoch auch, dass die Vorsprünge 20-22 bzw. die Vertiefungen in gebogenen bzw. gekrümmten Bereichen des Zwischenelements 10 ausgebildet sind.

Die Drehachse des Rotors (nicht gezeigt) befindet sich unterhalb der Mitte des Schaufelfußes 30 in Fig. 2.

Das Zwischenelement 10 weist eine untere, der Drehachse des Rotors zugewandte ebene bzw. planare Fläche bzw. Unterseite auf. Zwischen dieser ebenen bzw. planaren Unterseite und der Drehachse des Rotors ist ein axiales Sicherungselement, insbesondere ein axiales Sicherungsblech 50, angeordnet. Das axiale Sicherungsblech 50 drückt in Radialrichtung gegen das Zwischenelement 10, so dass das Zwischenelement 10 wiederum den Schaufelfuß 30 in radialer Richtung drückt bzw. vorspannt.

Das Zwischenelement 10 kann symmetrisch bezüglich einer von oben nach unten mittig in Fig. 2 verlaufenden Symmetrieebene 60 ausgebildet sein. Es ist jedoch auch möglich, dass wie in Fig. 2 gezeigt, das Zwischenelement 10 asymmetrisch bezüglich dieser Symmetrieebene 60 ausgebildet ist.

Der im Querschnitt rechteckige Vorsprung 20-22 ist derart ausgebildet, dass der Vorsprung 20-22 die Rotorscheibe 40 (insbesondere während der Drehung des Rotors) fast berührt. Es verbleibt nur ein sehr kleiner Zwischenraum zwischen dem Vorsprung 20-22 und der Rotorscheibe 40. Die Vorsprünge 20-22 auf der rechten Seite des Zwischenelements 10 berühren die Rotorscheibe 40.

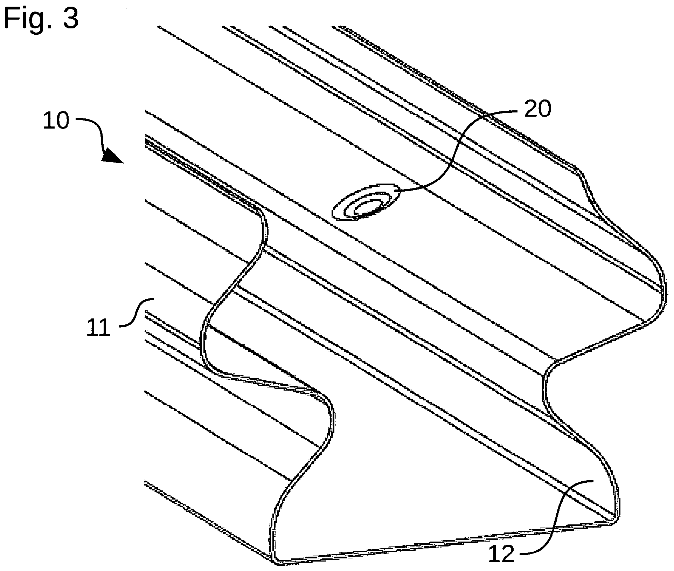

Fig. 3 zeigt eine perspektivische Ansicht auf eine weitere Ausführungsform des erfindungsgemäßen Zwischenelements 10. In Fig. 3 kann man die Erstreckung des Zwischenelements 10 parallel zu der Drehachse des Rotors erkennen. Fig. 3 zeigt nur einen Teil des Zwischenelements 10. Die vollständige Ausdehnung des Zwischenelements 10 parallel zu der Drehachse des Rotors ist in Fig. 3 nicht zu sehen. Das Zwischenelement 10 weist entlang der Drehachse des Rotors eine Höhe bzw. Ausdehnung auf, die der Höhe des Schaufelfußes 30 entlang der Drehachse des Rotors entspricht. Die Höhe verläuft in Fig. 2 senkrecht zur Zeichenebene.

Die Vertiefung in dem Zwischenelement 10 ist kalottenförmig ausgebildet. Die Vertiefung auf der Innenseite bzw. Innenfläche 12, die auf der Außenseite bzw. Außenfläche 11 einen korrespondierenden Vorsprung 20-22 aufweist, befindet sich in einem (ohne die Vertiefung) planaren bzw. ebenen Teilbereich des Zwischenelements 10. Die Vertiefung bzw. der Vorsprung 20-22 befindet sich in der Mitte des planaren Teilbereichs, d.h. dass der Abstand des Vorsprungs 20-22 zu dem von der Drehachse des Rotors entfernteren Ende des planaren Teilbereichs gleichgroß wie der Abstand des Vorsprungs 20-22 zu dem zu der Drehachse des Rotors näheren Ende des planaren Teilbereichs ist.

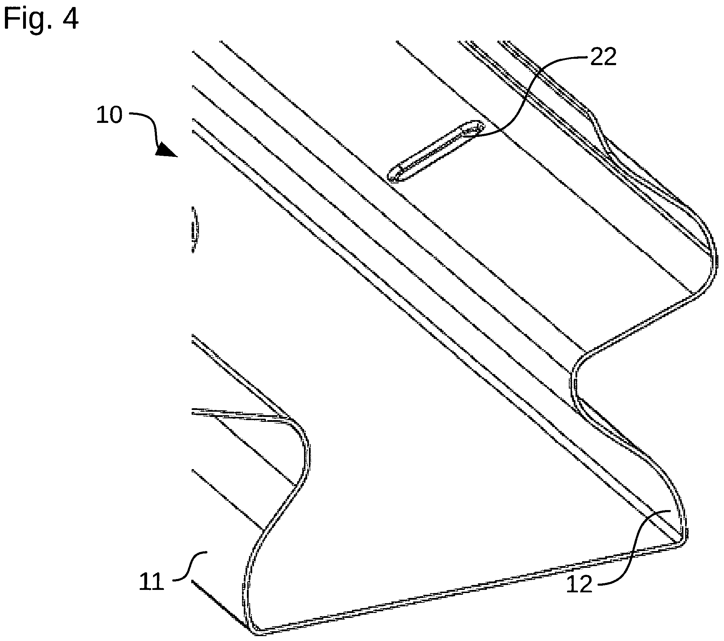

Fig. 4 zeigt eine perspektivische Ansicht auf eine weitere Ausführungsform des erfindungsgemäßen Zwischenelements 10. Fig. 4 zeigt nur einen Teil des Zwischenelements 10. Die vollständige Ausdehnung des Zwischenelements 10 parallel zu der Drehachse des Rotors ist in Fig. 4 nicht zu sehen.

Der Vorsprung 20-22 und somit auch die in Fig. 4 sichtbare Vertiefung ist länglich ausgebildet. Im Querschnitt in einer Ebene senkrecht zu der Drehachse des Rotors erscheint die Vertiefung bzw. der Vorsprung 22 rechteckig (vgl. Fig. 2). Die Vertiefung erstreckt sich über im Wesentlichen die gesamte Breite eines planaren Teilbereichs des Zwischenelements 10. Die Breite des planaren Teilbereichs des Zwischenelements 10 verläuft in einer Ebene, die senkrecht zur der Drehachse des Rotors verläuft. Entlang der Drehachse des Rotors weist die Vertiefung und somit auch der Vorsprung 22 im Vergleich zu seiner Breite eine nur geringe Länge bzw. Größe auf.

Die Vertiefung bzw. der Vorsprung 22 weist im Wesentlichen die Form eines Quaders auf, wobei die Wand der Vertiefung mehrere Kanten umfassen kann. Somit kann die Vertiefung über mehrere Kanten in den planaren Teilbereich des Zwischenelements 10 übergehen.

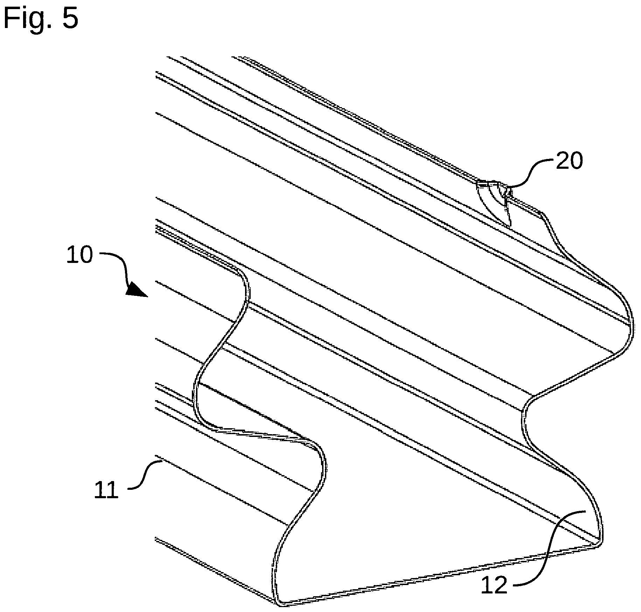

Fig. 5 zeigt eine perspektivische Ansicht auf eine weitere Ausführungsform des erfindungsgemäßen Zwischenelements 10. Fig. 5 zeigt nur einen Teil des Zwischenelements 10. Die vollständige Ausdehnung des Zwischenelements 10 parallel zu der Drehachse des Rotors ist in Fig. 5 nicht zu sehen.

Der Vorsprung 20-22 bzw. die Vertiefung befindet sich bei der in Fig. 5 gezeigten Ausführungsform am oberen Rand bzw. oberen Ende des Zwischenelements 10. Der obere Rand des Zwischenelements 10 befindet sich an einem der Drehachse des Rotors abgewandten Ende.

Die Vertiefung bzw. Aussparung wird üblicherweise dadurch erzeugt, dass der Rand an einem Punkt bzw. in einem Teilbereich eingedrückt wird. Die Vertiefung weist in Fig. 5 eine Form auf, die kalottenähnlich ist. In Bezug auf Fig. 2 würde sich diese Vertiefung bzw. der Vorsprung 20-22 im Bereich einer Freifläche 15-17, nämlich der oberen Freifläche 15 befinden. Hier ist der Abstand zwischen dem Zwischenelement 10 und der Rotorscheibe 40 (ohne Berücksichtigung des Vorsprungs 20-22) besonders groß.

Der Vorsprung 20-22 bzw. die Vertiefung kann sich jeweils über den planaren Teilbereich bis in den gekrümmten Teilbereich des Zwischenelements 10 erstrecken. In diesem gekrümmten Teilbereich des Zwischenelements 10 sind üblicherweise die Freiflächen 15-17 ausgebildet, d.h. das Zwischenelement 10 berührt die Rotorscheibe 40 nicht und weist hier oftmals einen großen Abstand zu der Rotorscheibe 40 auf.

Das Zwischenelement 10 kann insbesondere eine geringe Dicke aufweisen, wobei die Dicke von der Drehachse des Rotors in Richtung der Schaufel 35 bzw. des Schaufelfußes 30 gemessen wird. Die Dicke des Zwischenelements 10 kann beispielsweise im Bereich von ca. 1 mm bis ca. 5 mm, insbesondere im Bereich von ca. 2 mm bis ca. 4 mm liegen, z.B. ca. 3 mm, liegen. Das Zwischenelement 10 kann somit als (Metall-)Blech ausgebildet sein.

Die Vertiefung bzw. der Vorsprung 20-22 kann als eine Sicke in dem Zwischenelement 10 ausgebildet sein.

Der jeweilige Vorsprung 20-22 bzw. die jeweilige Vertiefung ist üblicherweise punktsymmetrisch in Bezug auf die Mitte des jeweiligen Vorsprungs 20-22 bzw. der jeweiligen Vertiefung ausgebildet. Vorstellbar ist jedoch auch, dass der jeweilige Vorsprung 20-22 bzw. die jeweilige Vertiefung eine asymmetrische Form aufweist.

### Bezugszeichenliste

- 10: Zwischenelement
- 11: Außenfläche
- 12: Innenfläche
- 15-17: Freifläche
- 20-22: Vorsprung
- 30: Schaufelfuß
- 35: Schaufel
- 40: Rotorscheibe
- 42, 43: Höcker der Rotorscheibe
- 50: axiales Sicherungsblech
- 60: Symmetrieebene

## Patentansprüche

1. Zwischenelement (10) für eine Schaufel-Rotorscheiben-Verbindung bei einem Rotor einer Strömungsmaschine, insbesondere bei einem Rotor eines Triebwerks, wobei das Zwischenelement (10) derart an eine Form eines Schaufelfußes (30) der Schaufel (35) und an eine Schaufelfußaufnahme einer Rotorscheibe (40) zum Aufnehmen des Schaufelfußes (30) angepasst ist, dass das Zwischenelement (10) im zwischen dem Schaufelfuß (30) und der Rotorscheibe (40) angeordneten Zustand einen unmittelbaren Kontakt zwischen Schaufelfuß (30) und Rotorscheibe (40) verhindert, wobei das Zwischenelement (10) auf seiner im zwischen dem Schaufelfuß (30) und der Rotorscheibe (40) angeordneten Zustand der Rotorscheibe (40) zugewandten Außenfläche (11) mindestens einen Vorsprung (20-22) zum Verringern eines Luftstroms parallel zu einer Drehachse des Rotors zwischen der Rotorscheibe (40) und dem Zwischenelement (10) aufweist, und
wobei das Zwischenelement (10) auf seiner im zwischen dem Schaufelfuß (30) und der Rotorscheibe (40) angeordneten Zustand dem Schaufelfuß (30) zugewandten Innenfläche (12) eine dem mindestens einen Vorsprung (20-22) auf der Außenfläche (11) des Zwischenelements (10) korrespondierende Vertiefung aufweist
**dadurch gekennzeichnet, dass**
der mindestens eine Vorsprung im angeordneten Zustand im Bereich einer nichttragenden Flanke des Schaufelfußes (30) angeordnet ist und sich vom Schaufelfuß weg erstreckt.

2. Zwischenelement (10) nach Anspruch 1, wobei
das Zwischenelement (10) als Blech, insbesondere Verschleißschutzblech, mit einer Axialschnittkontur, welche einer Axialschnittkontur des Schaufelfußes (30), der insbesondere ein Tannenbaum- , Schwalbenschwanz- oder Hammerkopfprofil hat, entspricht, ausgebildet ist.

3. Zwischenelement (10) nach Anspruch 1 oder 2, wobei
das Zwischenelement (10) im angeordneten Zustand des Schaufelfußes (30) an seiner der Schaufelfußaufnahme zugewandten Fläche, insbesondere vollständig, umgibt.

4. Zwischenelement (10) nach einem der vorhergehenden Ansprüche, wobei
das Zwischenelement (10) auf seiner im zwischen dem Schaufelfuß (30) und der Rotorscheibe (40) angeordneten Zustand der Rotorscheibe (40) zugewandten Außenfläche (11) mehrere Vorsprünge (20-22) zum Verringern eines Luftstroms parallel zu der Drehachse des Rotors zwischen der Rotorscheibe (40) und dem Zwischenelement (10) und auf seiner dem Schaufelfuß (30) zugewandten Innenfläche (12) mehrere zu den Vorsprüngen (20-22) jeweils korrespondierende Vertiefungen aufweist.

5. Zwischenelement (10) nach Anspruch 4, wobei
die mehreren Vorsprünge (20-22) im zwischen dem Schaufelfuß (30) und der Rotorscheibe (40) angeordneten Zustand in einer Schnittebene senkrecht zur Drehachse der Rotorscheibe (40) zumindest teilweise nebeneinander angeordnet sind.

6. Zwischenelement (10) nach Anspruch 4 oder 5, wobei
die mehreren Vorsprünge (20-22) im zwischen dem Schaufelfuß (30) und der Rotorscheibe (40) angeordneten Zustand auf unterschiedlichen Höhen entlang der Drehachse des Rotors angeordnet sind.

7. Zwischenelement (10) nach einem der Ansprüche 4 bis 6, wobei die mehreren Vorsprünge (20-22) im angeordneten Zustand im Bereich einer nichttragenden Flanke des Schaufelfußes (30) sind und sich vom Schaufelfuß weg erstrecken oder wobei ein oder mehrere der mehreren Vorsprünge (20-22) im angeordneten Zustand im Bereich einer nichttragenden Flanke des Schaufelfußes (30) sind und ein oder mehrere der mehreren Vorsprünge (20-22) im angeordneten Zustand im Bereich eines Grunds der Schaufelfußaufnahme angeordnet sind sich vom Schaufelfuß weg erstrecken.

8. Zwischenelement (10) nach einem der vorhergehenden Ansprüche, wobei
der mindestens eine Vorsprung (20-22) im Wesentlichen die Form einer Kalotte aufweist.

9. Zwischenelement (10) nach einem der vorhergehenden Ansprüche, wobei
der mindestens eine Vorsprung (20-22) im zwischen dem Schaufelfuß (30) und der Rotorscheibe (40) angeordneten Zustand in einer Schnittebene senkrecht zur Drehachse der Rotorscheibe (40) eine im Wesentlichen rechteckige Form aufweist.

10. Zwischenelement (10) nach einem der vorhergehenden Ansprüche, wobei
im zwischen dem Schaufelfuß (30) und der Rotorscheibe (40) angeordneten Zustand der mindestens eine Vorsprung (20-22) an einem der Drehachse des Rotors abgewandten Ende des Zwischenelements (10) angeordnet ist.

11. Zwischenelement (10) nach einem der vorhergehenden Ansprüche, wobei
im zwischen dem Schaufelfuß (30) und der Rotorscheibe (40) angeordneten Zustand zwischen einem der Drehachse des Rotors zugewandten Ende des Zwischenelements (10) und der Rotorscheibe (40) ein axiales Sicherungselement, insbesondere ein axiales Sicherungsblech (50), zur axialen Sicherung und/oder zum radialen Vorspannen des Schaufelfußes (30) angeordnet ist.

12. Zwischenelement (10) nach einem der vorhergehenden Ansprüche, wobei
der mindestens eine Vorsprung (20-22) in einem planaren Teilbereich des Zwischenelements (10) ausgebildet ist.

13. Zwischenelement (10) nach Anspruch 12, wobei
sich der mindestens eine Vorsprung (20-22) im Wesentlichen über die gesamte Breite des planaren Teilbereichs des Zwischenelements (10) verläuft, wobei sich die Breite des planaren Teilbereichs in einer Schnittebene, die senkrecht zur Drehachse der Rotorscheibe (40) verläuft, erstreckt.

14. Rotor für eine Strömungsmaschine, insbesondere für ein Triebwerk, wobei der Rotor eine Rotorscheibe (40) und eine Vielzahl von Schaufeln, die an der Rotorscheibe (40) befestigt sind, umfasst, wobei
ein Zwischenelement (10) nach einem der vorhergehenden Ansprüche zwischen mindestens einem Schaufelfuß (30) einer Schaufel (35) und der Rotorscheibe (40) derart angeordnet ist, dass der Schaufelfuß (30) die Rotorscheibe (40) nicht unmittelbar berührt.

15. Strömungsmaschine mit einem Rotor nach Anspruch 14.

## Claims

1. An intermediate element (10) for a blade-rotor disc connection in a rotor of a turbomachine, in particular in a rotor of an engine, the intermediate element (10) being adapted to a shape of a blade root (30) of the blade (35) and to a blade root receptacle of a rotor disc (40) for receiving the blade root (30) such that the intermediate element (10), in the state arranged between the blade root (30) and the rotor disc (40), prevents direct contact between the blade root (30) and the rotor disc (40), the intermediate element (10) comprising, on its outer surface (11) which faces the rotor disc (40) in the state arranged between the blade root (30) and the rotor disc (40), at least one projection (20-22) for reducing an air flow parallel to an axis of rotation of the rotor between the rotor disc (40) and the intermediate element (10), and
the intermediate element (10) comprising, on its inner surface (12) which faces the blade root (30) in the state arranged between the blade root (30) and the rotor disc (40), a recess corresponding to the at least one projection (20-22) on the outer surface (11) of the intermediate element (10)
**characterized in that**
the at least one projection, in the arranged state, is arranged in the region of a non-load-bearing flank of the blade root (30) and extends away from the blade root.

2. The intermediate element (10) according to claim 1, wherein
the intermediate element (10) is formed as a metal sheet, in particular a wear protection plate, having an axial sectional contour which corresponds to an axial sectional contour of the blade root (30), which in particular has a fir tree, dovetail or hammerhead profile.

3. The intermediate element (10) according to either claim 1 or claim 2, wherein
the intermediate element (10) in the arranged state of the blade root (30) surrounds, in particular completely, on its surface facing the blade root receptacle.

4. The intermediate element (10) according to any of the preceding claims, wherein the intermediate element (10) comprises, on its outer surface (11) which faces the rotor disc (40) in the state arranged between the blade root (30) and the rotor disc (40), a plurality of projections (20-22) for reducing an air flow parallel to the axis of rotation of the rotor between the rotor disc (40) and the intermediate element (10), and a plurality of recesses respectively corresponding to the projections (20-22) on its inner surface (12) facing the blade root (30).

5. The intermediate element (10) according to claim 4, wherein
the plurality of projections (20-22), in the state arranged between the blade root (30) and the rotor disc (40), are arranged at least partially next to one another in a sectional plane perpendicular to the axis of rotation of the rotor disc (40).

6. The intermediate element (10) according to either claim 4 or claim 5, wherein
the plurality of projections (20-22), in the state arranged between the blade root (30) and the rotor disc (40), are arranged at different heights along the axis of rotation of the rotor.

7. The intermediate element (10) according to any of claims 4 to 6, wherein the plurality of projections (20-22), in the arranged state, are in the region of a non-load-bearing flank of the blade root (30) and extend away from the blade root, or wherein one or more of the plurality of projections (20-22), in the arranged state, are in the region of a non-load-bearing flank of the blade root (30), and one or more of the plurality of projections (20-22), in the arranged state, are arranged in the region of a base of the blade root receptacle extend away from the blade root.

8. The intermediate element (10) according to any of the preceding claims, wherein the at least one projection (20-22) substantially has the shape of a spherical cap.

9. The intermediate element (10) according to any of the preceding claims, wherein the at least one projection (20-22), in the state arranged between the blade root (30) and the rotor disc (40), has a substantially rectangular shape in a sectional plane perpendicular to the axis of rotation of the rotor disc (40).

10. The intermediate element (10) according to any of the preceding claims, wherein,
in the state arranged between the blade root (30) and the rotor disc (40), the at least one projection (20-22) is arranged on an end of the intermediate element (10) facing away from the axis of rotation of the rotor.

11. The intermediate element (10) according to any of the preceding claims, wherein,
in the state arranged between the blade root (30) and the rotor disc (40), an axial securing element, in particular an axial securing plate (50), for axially securing and/or radially preloading the blade root (30) is arranged between an end of the intermediate element (10) facing the axis of rotation of the rotor and the rotor disc (40).

12. The intermediate element (10) according to any of the preceding claims, wherein
the at least one projection (20-22) is formed in a planar portion of the intermediate element (10).

13. The intermediate element (10) according to claim 12, wherein
the at least one projection (20-22) extends substantially over the entire width of the planar portion of the intermediate element (10), wherein the width of the planar portion extends in a sectional plane which extends perpendicularly to the axis of rotation of the rotor disc (40).

14. A rotor for a turbomachine, in particular for an engine, wherein the rotor comprises a rotor disc (40) and a plurality of blades which are fastened to the rotor disc (40), wherein
an intermediate element (10) according to any of the preceding claims is arranged between at least one blade root (30) of a blade (35) and the rotor disc (40) such that the blade root (30) does not directly contact the rotor disc (40).

15. A turbomachine having a rotor according to claim 14.

## Revendications

1. Élément intermédiaire (10) pour une liaison aube-disque de rotor dans un rotor d'une turbomachine, en particulier dans un rotor d'un groupe motopropulseur, l'élément intermédiaire (10) étant adapté à la forme d'un pied d'aube (30) de l'aube (35) et à un réceptacle de pied d'aube d'un disque de rotor (40) permettant de recevoir le pied d'aube (30) de telle manière que l'élément intermédiaire (10) empêche un contact direct entre le pied d'aube (30) et le disque de rotor (40) dans l'état disposé entre le pied d'aube (30) et le disque de rotor (40), l'élément intermédiaire (10) présentant, sur sa surface extérieure (11) orientée vers le disque de rotor (40) dans l'état disposé entre le pied d'aube (30) et le disque de rotor (40), au moins une saillie (20-22) permettant de réduire un flux d'air parallèle à un axe de rotation du rotor entre le disque de rotor (40) et l'élément intermédiaire (10), et
l'élément intermédiaire (10) présentant, sur sa surface intérieure (12) orientée vers le pied d'aube (30) dans l'état disposé entre le pied d'aube (30) et le disque de rotor (40), un évidement correspondant à l'au moins une saillie (20-22) sur la surface extérieure (11) de l'élément intermédiaire (10)
**caractérisé en ce que**
l'au moins une saillie est disposée, dans l'état disposé, dans la zone d'un flanc non porteur du pied d'aube (30) et s'étend en s'éloignant du pied d'aube.

2. Élément intermédiaire (10) selon la revendication 1,
l'élément intermédiaire (10) étant réalisé sous forme de tôle, en particulier de tôle de protection contre l'usure, comportant un contour de coupe axiale qui correspond à un contour de coupe axiale du pied d'aube (30) qui possède en particulier un profil en forme de sapin, de queue d'aronde ou de tête de marteau.

3. Élément intermédiaire (10) selon la revendication 1 ou 2,
l'élément intermédiaire (10) entourant, en particulier entièrement, à l'état disposé du pied d'aube (30) au niveau de sa surface orientée vers le réceptacle de pied d'aube.

4. Élément intermédiaire (10) selon l'une des revendications précédentes, l'élément intermédiaire (10) présentant, sur sa surface extérieure (11) orientée vers le disque de rotor (40) dans l'état disposé entre le pied d'aube (30) et le disque de rotor (40), plusieurs saillies (20-22) permettant de réduire un flux d'air parallèle à l'axe de rotation du rotor entre le disque de rotor (40) et l'élément intermédiaire (10), et plusieurs évidements correspondant respectivement aux saillies (20-22) sur sa surface intérieure (12) orientée vers le pied d'aube (30).

5. Élément intermédiaire (10) selon la revendication 4,
les saillies (20-22) étant au moins partiellement juxtaposées dans un plan de coupe perpendiculaire à l'axe de rotation du disque de rotor (40) dans l'état disposé entre le pied d'aube (30) et le disque de rotor (40).

6. Élément intermédiaire (10) selon la revendication 4 ou 5,
les saillies (20-22) étant disposées à des hauteurs différentes le long de l'axe de rotation du rotor dans l'état disposé entre le pied d'aube (30) et le disque de rotor (40).

7. Élément intermédiaire (10) selon l'une des revendications 4 à 6, les saillies (20-22) étant, dans l'état disposé, dans la zone d'un flanc non porteur du pied d'aube (30) et s'étendant en s'éloignant du pied d'aube ou une ou plusieurs saillies parmi les saillies (20-22) étant, dans l'état disposé, dans la zone d'un flanc non porteur du pied d'aube (30) et une ou plusieurs saillies parmi les saillies (20-22) étant disposées, dans l'état disposé, dans la zone d'un fond du réceptacle de pied d'aube et s'étendant en s'éloignant du pied d'aube.

8. Élément intermédiaire (10) selon l'une des revendications précédentes, l'au moins une saillie (20-22) présentant sensiblement la forme d'une calotte.

9. Élément intermédiaire (10) selon l'une des revendications précédentes, l'au moins une saillie (20-22) présentant une forme sensiblement rectangulaire dans un plan de coupe perpendiculaire à l'axe de rotation du disque de rotor (40) dans l'état disposé entre le pied d'aube (30) et le disque de rotor (40).

10. Élément intermédiaire (10) selon l'une des revendications précédentes,
dans l'état disposé entre le pied d'aube (30) et le disque de rotor (40), l'au moins une saillie (20-22) étant disposée à une extrémité de l'élément intermédiaire (10) opposée à l'axe de rotation du rotor.

11. Élément intermédiaire (10) selon l'une des revendications précédentes,
dans l'état disposé entre le pied d'aube (30) et le disque de rotor (40), un élément de blocage axial, en particulier une tôle de blocage axiale (50), permettant le blocage axial et/ou permettant la précontrainte radiale du pied d'aube (30), étant disposé entre une extrémité de l'élément intermédiaire (10) orientée vers l'axe de rotation du rotor et le disque de rotor (40).

12. Élément intermédiaire (10) selon l'une des revendications précédentes,
l'au moins une saillie (20-22) étant réalisée dans une zone partielle plane de l'élément intermédiaire (10).

13. Élément intermédiaire (10) selon la revendication 12,
l'au moins une saillie (20-22) s'étendant sensiblement sur toute la largeur de la zone partielle plane de l'élément intermédiaire (10), la largeur de la zone partielle plane s'étendant dans un plan de coupe qui s'étend perpendiculairement à l'axe de rotation du disque de rotor (40).

14. Rotor pour une turbomachine, en particulier pour un groupe motopropulseur, le rotor comprenant un disque de rotor (40) et une pluralité d'aubes fixées au disque de rotor (40),
un élément intermédiaire (10) selon l'une des revendications précédentes étant disposé entre au moins un pied d'aube (30) d'une aube (35) et le disque de rotor (40) de telle manière que le pied d'aube (30) ne touche pas directement le disque de rotor (40).

15. Turbomachine comportant un rotor selon la revendication 14.
